# EUROPÄISCHE PATENTSCHRIFT

(11) **EP 2 992 201 B1**
(45) Veröffentlichungstag und Bekanntmachung des Hinweises auf die Patenterteilung: **27.12.2017**
(21) Anmeldenummer: 14736638.9
(22) Anmeldetag: 03.07.2014
(51) Int. Cl.: F02M 21/02, F02B 37/007, F02M 21/04, F02B 29/04

(54) **GASMOTOR**
GAS ENGINE
MOTEUR A GAS

(30) Priorität: 04.07.2013 CH 12172013
(43) Veröffentlichungstag der Anmeldung: 09.03.2016
(73) Patentinhaber: Liebherr Machines Bulle SA, 1630 Bulle (CH)
(72) Erfinder: GEBHARDT, Thomas, 1700 Fribourg (CH)
(74) Vertreter: Laufhütte, Dieter
(86) Internationale Anmeldenummer: PCT/EP2014/001844
(87) Internationale Veröffentlichungsnummer: WO 2015/000599

(56) Entgegenhaltungen:
- WO-A1-2009/064971
- CA-A1- 2 549 215
- US-A1- 2013 133 630

## Beschreibung

Die vorliegende Erfindung betrifft einen Gasmotor mit einer Mischeinheit zum Mischen von zwei Gaskomponenten, welche einem oder mehreren Brennräumen des Gasmotors zugeführt werden, insbesondere zum Mischen von Brenngas und Ladeluft. Insbesondere betrifft die vorliegende Erfindung dabei Gasmotoren mit einem Abgasturbolader zur Aufladung mindestens einer der Gaskomponenten. Ein Beispiel eines solchen Motors ist in US-2013/133630 gezeigt. In Figuren 1a und 1b sind dabei zwei aus dem Stand der Technik bekannte Varianten dargestellt, wie eine Gemischbildung von Brenngas und Ladeluft bei einem Gasmotor mit einem Abgasturbolader implementiert werden kann. Dabei ist jeweils ein Verbrennungsmotor 1 mit einem Abgasturbolader 2 dargestellt, welcher aus einer im Abgasstrang 5 angeordneten Turbine 3 und einem von der Turbine angeordneten Verdichter 4 besteht. Die Zuführung der Ladeluft erfolgt dabei über eine Zuführung 8, die Zuführung des Brenngases über eine Zuführung 9.

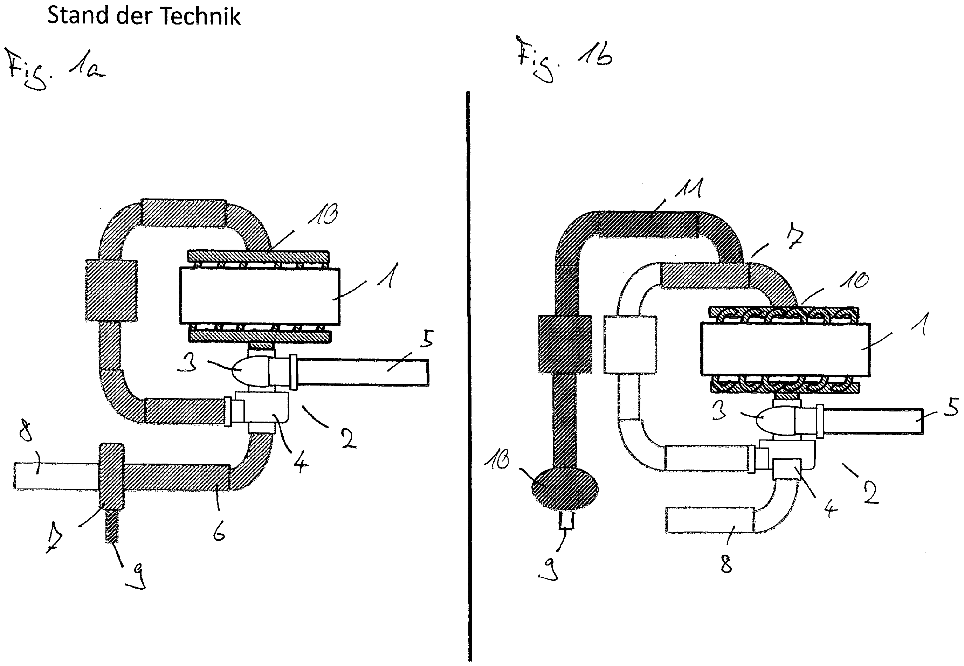

Bei der in Figur 1a gezeigten Anordnung erfolgt die Gemischbildung im drucklosen Bereich, beispielsweise über einen Venturi-Gasmischer. Der Gasmischer 7 wird daher vor dem Verdichter 4 im Ladeluftstrang positioniert.

Allerdings ist es für die möglichst präzise und dynamische Lambdakontrolle von Vorteil, wenn die Position der Gemischbildung möglichst dicht vor den Brennräumen und damit nach dem Verdichter 4 realisiert werden kann. Eine drucklose Eindüsung des Brenngases in die Ansaugluft ist dort jedoch nicht mehr möglich.

Bei der Figur 1b gezeigten Anordnung, bei welcher die Mischeinheit 7 nach dem Verdichter 4 in der Ansaugstrecke angeordnet ist, muss daher auch das Brenngas 9 verdichtet werden. Dies erfolgt bei bekannten Anordnungen mittels einer mechanischen oder elektrischen Pumpe 10. Ein optimaler Wirkungsgrad des Gesamtsystems ist hierdurch jedoch nicht erreichbar.

Aufgabe der vorliegenden Erfindung ist es daher, bekannte Gasmotoren insbesondere im Hinblick auf den Wirkungsgrad zu verbessern.

Diese Aufgabe wird erfindungsgemäß durch einen Gasmotor gemäß Anspruch 1 gelöst.

Der erfindungsgemäße Gasmotor umfasst eine Mischeinheit zum Mischen von mindestens zwei Gaskomponenten, welche einem oder mehreren Brennräumen des Gasmotors zugeführt werden. Weiterhin weist der Gasmotor mindestens zwei Verdichter auf, über welche die beiden Gaskomponenten vor der Zuführung zur Mischeinheit separat verdichtet werden. Erfindungsgemäß werden die beiden Verdichter dabei von mindestens einer im Abgasstrang des Gasmotors angeordneten Turbine angetrieben. Insbesondere kann es sich bei den beiden Gaskomponenten dabei um die Ladeluft und das Brenngas handeln.

Die vorliegende Erfindung erlaubt damit eine getrennte Verdichtung von Ansaugluft und Brenngas, so dass die Mischung der Medien möglichst nah am Brennraum erfolgen kann. Hierdurch ergibt sich eine verbesserte Gemischregelung hinsichtlich Dynamik, Präzision und Zylindergleichstellung. Weiterhin kann die Verdichtung des Brenngases erfindungsgemäß mit einem Wirkungsgrad erfolgen, welcher bekannten Verfahren überlegen ist, da für die Verdichtung beider Gaskomponenten auf einen Abgasturbolader zurückgegriffen wird.

Damit wird erfindungsgemäß das Prinzip eines Abgasturboladers nicht nur für die Ladeluft, sondern separat auch für das Brenngas eingesetzt. Dabei ist mindestens eine Turbine vorgesehen, welche durch das Abgas des Motors angetrieben wird, und die beiden separaten Verdichter für die beiden Gaskomponenten antreibt.

Erfindungsgemäß können dabei auch andere Medien als das Brenngas und die Ladeluft, und/oder gegebenenfalls noch weitere Gaskomponenten separat verdichtet und erst nach der Verdichtung gemischt werden.

Weiterhin können auch mehr als zwei Gaskomponenten separat durch Verdichter verdichtet werden, welche von mindestens einer im Abgasstrang angeordneten Turbine angetrieben werden.

Die vorliegende Erfindung beruht damit auf einer Verdichtung der Ansaugluft und des Brenngases mittels eines oder mehrerer Abgasturbolader, wobei die beiden Medien während der Verdichtung getrennt bleiben. Hierdurch wird eine verbesserte Gemischregelung erreicht, da die Regelung der Gemischbildung näher an den Brennräumen erfolgt. Die Verdichtung des reinen Brenngases erfolgt dabei separat, jedoch mit einem gegenüber dem derzeitig existierenden Verfahren überlegenen Wirkungsgrad. Die beschriebene Maschine besteht dabei funktional aus zwei Pumpen, welche auf zwei oder mehr Medien - Luft und ein oder mehrere gasförmige Brennstoffe - wirken, und welche über eine oder zwei Turbinen durch das Abgas des Motors angetrieben werden. Eine Kombination zur separaten Verdichtung weiterer Medien wäre nach demselben Prinzip ebenfalls möglich.

In einer ersten Ausführungsform der vorliegenden Erfindung werden die beiden Verdichter dabei gemeinsam von einer Turbine angetrieben. Diese Ausführungsform hat den Vorteil, dass auf der Antriebsseite keine Verdoppelung der Komponenten notwendig ist. Weiterhin sind die Drehzahlen der beiden Verdichter für die beiden Gaskomponenten, insbesondere für Brenngas und Ladeluft, fest miteinander gekoppelt. Daher bedarf es auch keiner separaten Regelung der beiden Komponenten. In einer besonders bevorzugten Ausführungsform sind die beiden Verdichter und die Turbine dabei auf einer gemeinsamen Welle angeordnet. Hierdurch ergibt sich eine besonders einfache Konstruktion.

In einer zweiten Ausführungsform werden die beiden Verdichter dagegen getrennt voneinander durch zwei im Abgasstrom angeordnete Turbinen angetrieben. Hier bedarf es zwar eines etwas größeren konstruktiven Aufwands. Es kann jedoch auf Standardkomponenten zurückgegriffen werden, da de facto zwei Abgasturbolader eingesetzt werden, von welchem einer die erste Gaskomponente und der andere die andere Gaskomponente verdichtet. Die beiden Turbinen dieser Abgasturbolader sind dabei beide im Abgasstrom angeordnet und werden somit durch das Abgas des Verbrennungsmotors angetrieben.

In einer ersten Variante sind dabei die beiden Turbinen seriell im Abgasstrom angeordnet. Das Abgas durchströmt damit nacheinander die beiden Turbinen.

In einer alternativen Ausführungsvariante sind die beiden Turbinen dagegen parallel im Abgasstrom angeordnet. Bevorzugt ist bei einer solchen Anordnung eine Steuerungsanordnung, bspw. eine Ventilanordnung oder Klappe, vorgesehen, über welche der Anteil des Abgasstroms, welcher durch die erste bzw. die zweite Turbine strömt, angesteuert werden kann.

In allen erfindungsgemäßen Ausführungsformen können eine oder mehrere Bypässe für die Turbine oder die Turbinen im Abgasstrom angeordnet sein. Vorteilhafterweise ist dabei jeweils eine Steuerungsanordnung, bspw. eine Ventilanordnung oder Klappe, vorgesehen, durch welche der Abgasstrom durch den bzw. die Bypässe gesteuert werden kann.

Sind die beiden Turbinen seriell angeordnet, so ist vorteilhafterweise jeder Turbine jeweils ein Bypass zugeordnet, um den Abgasstrom durch die jeweiligen Turbinen separat steuern zu können. Durch separat angeordnete Bypass-Leitungen können die Abgasströme über beide Turbinen unabhängig geregelt werden. Somit lassen sich sowohl der absolute Ladedruck als auch das Mischungsverhältnis (über das Verhältnis von Luft- und Brenngasladedruck) mit maximaler Effizienz regeln. Alternativ wäre jedoch auch denkbar, einen einzigen Bypass vorzusehen, welcher beide seriell geschalteten Turbinen überbrückt. Damit würde der Abgasstrom durch die beiden Turbinen durch eine Steuerung angesteuert.

Bei einer Anordnung mit zwei parallel angeordneten Turbinen ist der Bypass vorteilhafterweise parallel zu den beiden Turbinen angeordnet.

Ist nur eine Turbine zum Antrieb beider Verdichter vorgesehen, so weist diese Turbine bevorzugt ebenfalls einen Bypass auf, über welchen die Drehzahl der Turbine angesteuert werden kann.

Bevorzugt weist der Gasmotor dabei eine Steuerung auf, welche den Strom durch den bzw. die Bypässe und/oder die Drehzahl der Turbine bzw. Turbinen ansteuert.

Bevorzugt sind die beiden Verdichter so ausgelegt, dass die Ladeluft auf 1,5 bis 6 Bar Überdruck verdichtet wird, während das Brenngas auf einen um den Faktor 2 bis 4 höheren Druck verdichtet wird. Der absolute Ladedruck und das Verhältnis der beiden Ladedrücke ist vom angestrebten Misch- und Regelverhalten und vom Mischungsverhältnis (λ) abhängig. Gegebenenfalls kann dabei eine Steuerung vorgesehen sein, welche die Verdichter bzw. die Turbinen entsprechend ansteuert.

Weiterhin kann der erfindungsgemäße Gasmotor mindestens einen zwischen einem der Verdichter und der Mischeinheit oder nach der Mischeinheit angeordneten Kühler aufweisen. In einer Ausführungs-Variante sind zwischen beiden Verdichtern und der Mischeinheit jeweils Kühler angeordnet. Insbesondere kann dabei zwischen Verdichter und Mischeinheit im Ladeluftstrang ein Ladeluftkühler und / oder zwischen Verdichter und Mischeinheit im Brenngasstrang ein Brenngaskühler vorgesehen sein. Dabei können die beiden Kühler eine Baueinheit bilden. In einer alternativen Ausführung kann der Kühler als Gemischkühler zwischen Mischeinheit und Brennraum ausgeführt sein.
In einer ersten erfindungsgemäßen Variante ist die Mischeinheit vor einer Verzweigung der Ansaugstrecke für die einzelnen Brennräume angeordnet. Es erfolgt damit eine Zentralrohreinblasung des bedruckten Brenngases an einer beliebigen Position zwischen dem Verdichter für die Ladeluft und der Verzweigung der Ansaugstrecke.

Alternativ kann die Mischeinheit mindestens zwei Mischbereiche aufweisen, die jeweils nach einer Verzweigung der Ansaugstrecken für die einzelnen Brennräume angeordnet sind. Besonders bevorzugt erfolgt damit eine Einblasung des bedruckten Brenngases direkt in die jeweiligen Ansaugkanäle jedes einzelnen Zylinders. Bei dieser Variante erfolgt damit eine Verzweigung sowohl im Ladeluftstrang als auch im Brenngasstrang.

Der Gasmotor weist bevorzugt eine Steuerung auf, durch welche das Luft-Kraftstoff-Verhältnis des sich ergebenden Gemischs gesteuert und/oder geregelt werden kann. Die Steuerung erfolgt bevorzugt durch Ansteuerung der Mischeinheit und/oder der Abgasturbolader.

Die vorliegende Erfindung kommt besonders bevorzugt bei Gasmotoren zum Einsatz, welche so ausgeführt sind, dass sie mit einem stöchiometrischen oder überoder unterstöchiometrischen Gemisch arbeiten. Insbesondere erfolgt die Mischung der Ladeluft und des Brenngases damit in einer solchen Art und Weise, dass das sich ergebende Gemisch Gemisch auf ein angestrebtes Mischungsverhältnis besonders exakt und stabil eingeregelt wird. Dabei kann eine Steuerung vorgesehen sein, welche die Mischeinheit und/oder die einzelnen Komponenten der Turboaufladung so ansteuert, dass sich ein gewünschtes Luft/Kraftstoffgemisch ergibt. Bevorzugt erfolgt dabei eine Gemischregelung durch Rückkopplung des Signals eines Luft-Kraftstoff-Sensors oder durch anderweitige direkte oder indirekte Bestimmung des Mischungsverhältnisses mittels anderer geeigneter Methoden (z.B. Ladedruckoder Brennraumtemperatur-Regelung).

Die vorliegende Erfindung kann dabei bei Gasmotoren eingesetzt werden, welche nach dem Otto-Prinzip oder welche nach dem Diesel-Prinzip arbeiten.

In einer ersten Variante weist der Gasmotor dabei mindestens eine Zündkerze zum Zünden des Gemisches im Brennraum auf.

In weiteren Ausführungsformen weist der Gasmotor mindestens eine Zündöleinspritzung zum Zünden des Gemisches im Brennraum auf, und / oder mindestens eine Glühkerze im Brennraum.

Als Brenngas kann erfindungsgemäß ein beliebiger gasförmiger Treibstoff eingesetzt werden, beispielsweise Erdgas, Biogas, synthetische Gase, LNG, LPG, CNG etc. Das Brenngas wird dabei wie oben beschrieben entweder mit einem zweiten Turbolader oder über einen einzigen zusammengesetzten Turbolader aus einer Turbine und zwei Verdichtern separat zur Ladeluft verdichtet. Die Energie im Abgasstrom wird damit erfindungsgemäß sowohl für die Verdichtung der Ansaugluft, als auch separat für die Verdichtung des gasförmigen Treibstoffes genutzt.

Im Ergebnis wird damit erfindungsgemäß bei getrennter Verdichtung von Ansaugluft und Brenngas in Summe dieselbe Gasmenge mit einem ähnlichen Druckverhältnis verdichtet, wie dies bei einer gemeinsamen Verdichtung eines Gas-Luftgemisches der Fall wäre. Es ergibt sich also ein vergleichbarer Gesamtwirkungsgrad der Turboaufladung, und somit im Vergleich zu heutigen Systemen mit Gaseinblasung eine wesentliche Verbesserung des Motor- bzw. Anlagenwirkungsgrades.

Die vorliegende Erfindung umfasst neben dem Gasmotor weiterhin ein Verfahren zum Betrieb eines Gasmotors, bei welchem die Energie im Abgasstrom dazu genutzt wird, um zwei Gaskomponenten, insbesondere das Brenngas und die Ladeluft, getrennt voneinander zu verdichten, bevor diese gemischt werden.

Bevorzugt erfolgt das erfindungsgemäße Verfahren dabei so, wie dies bereits oben im Hinblick auf den Gasmotor beschrieben wurde.

Besonders bevorzugt handelt es sich bei dem erfindungsgemäßen Verfahren dabei um ein Verfahren zum Betrieb eines Gasmotors, wie er bereits oben beschrieben wurde.

Der erfindungsgemäße Gasmotor sowie das erfindungsgemäße Verfahren können dabei bei einer Vielzahl von unterschiedlichen Anwendungen zum Einsatz kommen.

Die vorliegende Erfindung umfasst dabei insbesondere eine stationäre Vorrichtung mit einem Gasmotor, wie er oben beschrieben wurde. Bevorzugt treibt der Gasmotor dabei einen Elektrogenerator und / oder eine Hydraulikpumpe an. Besonders bevorzugt ist der Gasmotor dabei an eine stationäre Gasversorgung angeschlossen. Insbesondere kann dabei das Brenngas aus einem Gasversorgungsnetzwerk und / oder einem Gastank zugeführt werden.

Weiterhin umfasst die vorliegende Erfindung ein Schiff mit einem Gasmotor, wie er oben beschrieben wurde. Insbesondere treibt der Gasmotor dabei die Schiffsschraube an. Bevorzugt wird das Gas dabei aus einem Gastank zum Gasmotor geleitet.

Die vorliegende Erfindung umfasst weiterhin ein Transportfahrzeug mit einem Gasmotor, wie er oben beschrieben wurde. Insbesondere dient das Transportfahrzeug dabei zum Transport von Personen und / oder zum Transport von Gütern. Insbesondere kann es sich bei dem Transportfahrzeug dabei um einen Bus oder einen Lastwagen handeln. Bevorzugt treibt der Gasmotor dabei ein Fahrwerk des Transportfahrzeuges an.

Die vorliegende Erfindung umfasst weiterhin ein verfahrbares Arbeitsgerät mit einem Gasmotor, wie er oben beschrieben wurde. Insbesondere kann der Gasmotor dabei zum Antrieb eines Fahrwerks und / oder einer Arbeitsausrüstung dienen. Dabei kann vorgesehen sein, dass der Gasmotor eine Hydraulikpumpe eines Hydrauliksystems antreibt. Das Hydrauliksystem kann wiederum dazu eingesetzt werden, um ein Fahrwerk- und / oder eine Arbeitsausrüstung des Arbeitsgerätes anzutreiben.

Unabhängig von der Anwendung kann das Brenngas in einem Tank gespeichert und von dem Tank zum Verdichter geleitet werden. Alternativ kann das Gas auch über ein Gasversorgungsnetz zur Verfügung gestellt werden. Insbesondere kann dabei eine stationäre Gasleitung zu einem Gasversorgungsnetz vorgesehen sein.

Die vorliegende Erfindung wird nun anhand von Ausführungsbeispielen sowie Zeichnungen näher dargestellt.

Dabei zeigen:
- Figur 1a:: eine erste Variante eines Gasmotors gemäß dem Stand der Technik, bei welchem die Gemischbildung mittels einer Venturi-Düse vor dem Verdichter des Abgasturboladers erfolgt,
- Figur 1b:: einen Gasmotor gemäß dem Stand der Technik, bei welchem die Gemischbildung nach dem Abgasturbolader erfolgt, wobei das Brenngas elektrisch oder mechanisch verdichtet wird.
- Figur 2:: ein erstes Ausführungsbeispiel der vorliegenden Erfindung, bei welchem die getrennte Verdichtung von Brenngas und Ansaugluft mittels zweier Abgasturbolader erfolgt, welche in Reihe geschaltet sind und
- Figur 3:: ein zweites Ausführungsbeispiel der vorliegenden Erfindung, bei welchem die getrennte Verdichtung von Brenngas und Ansaugluft mittels eines kombinierten Turboladers erfolgt, bei welchem zwei Verdichter von einer gemeinsamen Turbine angetrieben werden.

Für eine präzise und dynamische Lambda-Kontrolle ist es notwendig, die Position der Gemischbildung von Brenngas und Ladeluft möglichst dicht vor den Brennräumen des Gasmotors zu realisieren. Dies ist mit der Einbringung des Brenngases in die Ansaugstrecke möglich (Zentralrohreinblasung an einer beliebigen Position zwischen Verdichter und Verzweigung der Ansaugstrecke), oder durch eine *Port Injection,* d. h. die Einblasung direkt in den Ansaugkanal jedes einzelnen Zylinders. Da die Ladeluft erfindungsgemäß über einen Abgasturbolader bedruck wird, ist es für die Einblasung des Brenngases notwendig, dieses ebenfalls zu verdichten, beispielsweise auf einen Druck zwischen 8 und 12 Bar.

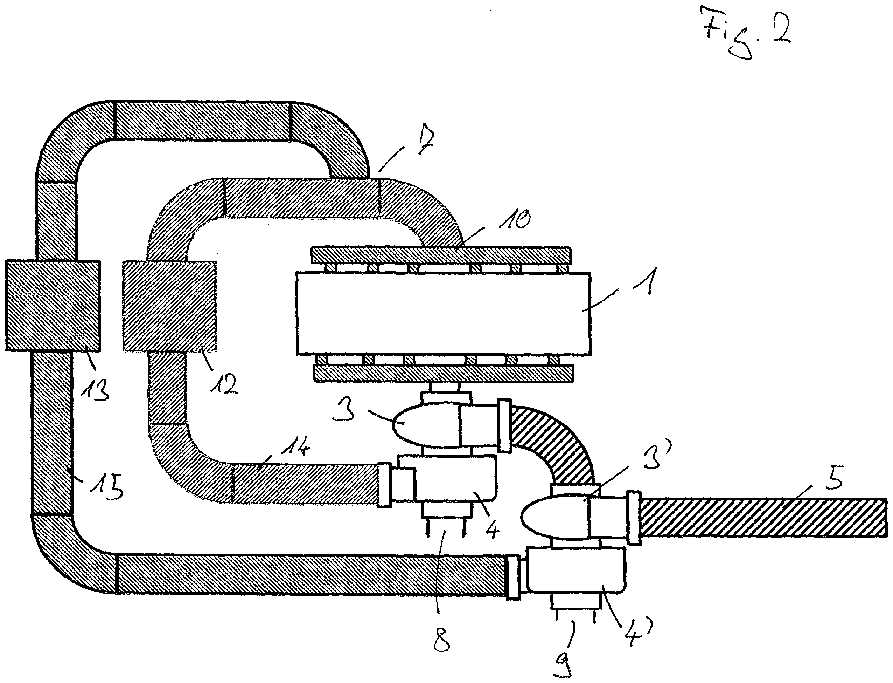

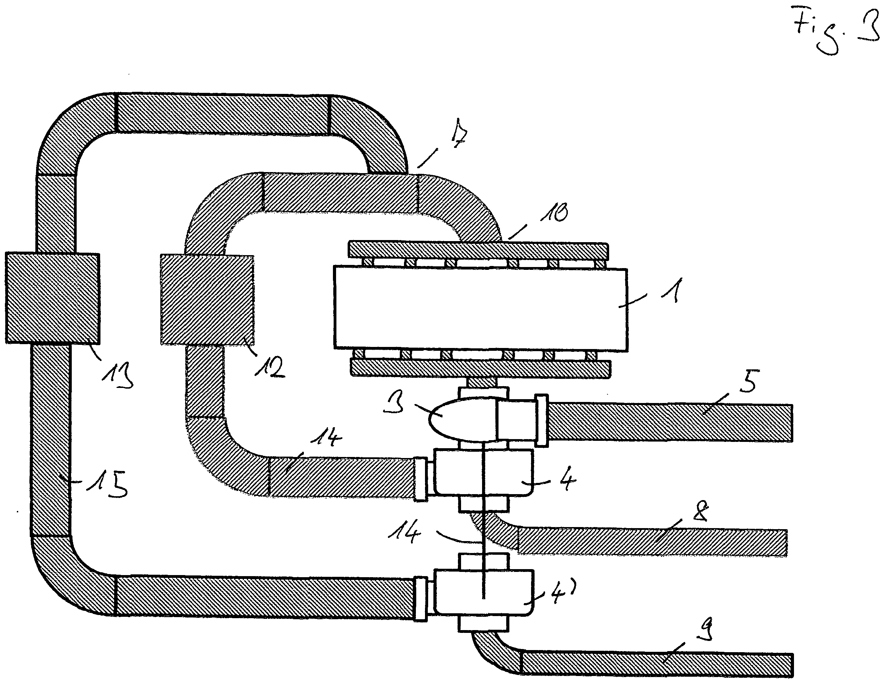

Bei den in Figuren 2 und 3 gezeigten Ausführungsbeispielen ist dabei ein Gasmotor 1 vorgesehen, in dessen Abgasstrang mindestens ein Abgasturbolader mit mindestens einer Turbine 3 angeordnet ist, welche von dem aus dem Verbrennungsmotor 1 durch den Abgasstrang 5 strömenden Abgas angetrieben wird. Die Turbine 3 treibt dabei mindestens einen Verdichter 4 an, über welchen die über die Ladeluftzufuhr 8 zugeführte Ladeluft verdichtet und über die Ansaugstrecke 14 zu den Brennräumen des Verbrennungsmotors 1 geleitet wird. Der Verbrennungsmotor 1 weist dabei eine Mehrzahl von Brennräumen auf, wobei die Ladeluft über eine Verzweigung 10 der Ansaugstrecke zu den einzelnen Brennräumen bzw. Zylindern geführt wird.

In beiden Ausführungsbeispielen erfolgt die Einblasung des Brenngases dabei über eine Mischeinheit 7, welche nach dem Verdichter 4 in der Ansaugstrecke 14 vorgesehen ist. Im Ausführungsbeispiel ist die Mischeinheit 7 dabei vor der Verzweigung 10 der Ansaugstrecke angeordnet. Alternativ könnte Die Mischeinheit auch nach der Verzweigung 10 angeordnet sein, so dass die Einblasung direkt in die jeweiligen Ansaugkanäle der einzelnen Zylinder erfolgt. Hierzu müsste auch die Brenngasleitung 15 eine entsprechende Verzweigung aufweisen.

Erfindungsgemäß werden die Ansaugluft und das Brenngas mit einem kombinierten oder zwei separaten Abgasturboladern getrennt verdichtet, bevor die beiden Komponenten der Mischeinheit 7 zugeführt werden. Damit wird die Energie im Abgasstrom sowohl für die Verdichtung der Ansaugluft, als auch separat für die Verdichtung des Treibstoffes genutzt. Als gasförmiger Treibstoff kann dabei beispielsweise Erdgas, Biogas, synthetische Gase, LNG, LPG, CNG und Ähnliches eingesetzt werden.

Die erfindungsgemäße separate Verdichtung des Brenngases kann wie in Figur 2 gezeigt mit Hilfe eines zweiten Turboladers erfolgen, welcher im Abgasstrom vor oder nach dem Turbolader für die Ansaugluft oder parallel zu diesem angeordnet ist. Bei der in Figur 2 gezeigten Ausführungsform der vorliegenden Erfindung ist dabei zusätzlich zu dem ersten Abgasturbolader aus Turbine 3 und Verdichter 4 für die Ladeluft ein zweiter Abgasturbolader aus einer Turbine 3' und einem Verdichter 4' vorgesehen, über welche das Brenngas verdichtet wird. Im Ausführungsbeispiel ist die Turbine 3' des zweiten Abgasturboladers dabei seriell zur Turbine 3 des ersten Abgasturboladers im Abgasstrang 5 angeordnet und der ersten Turbine 3 nachgeschaltet. Es wäre jedoch auch eine umgekehrte Anordnung bzw. eine parallele Anordnung der beiden Turbinen denkbar. Der zweite Abgasturbolader verdichtet dabei das über die Brenngaszuführung 9 zugeführte Brenngas und führt dies über die Brenngasleitung 15 zur Mischeinheit 7, wo das bedruckte Brenngas in die bedruckte Ladeluft eingedüst wird.

Alternativ kann die separate Verdichtung des Brenngases und der Ladeluft über einen einzigen zusammengesetzten Turbolader erfolgen, welcher aus einer Turbine und zwei Verdichtern besteht, wie dies in Figur 3 dargestellt ist. Dabei treibt die Turbine 3 sowohl den Verdichter 4 für die Ladeluft, als auch den Verdichter 4' für das Brenngas an. Die beiden Verdicher 4 und 4' können dabei auf einer gemeinsamen Welle mit der Turbine 3 verbaut sein. Bei dieser Ausführung ersetzt der zweite Verdichter beispielsweise einen Abtrieb der Abgasturboladerwelle, welcher bei bekannten Abgasturbolader beispielsweise einen Elektrogenerator antreiben könnte. Auch hier kann daher auf Standardkomponenten zurückgegriffen werden. Über die Dimensionierung der einzelnen Komponenten (1 oder mehrere Turbinen, 2 oder mehr Verdichter) kann das Druckverhältnis und damit das Mischverhalten der verschiedenen Gaskomponenten angepasst werden.

In den in Figuren 2 und 3 gezeigten Ausführungsbeispielen sind dabei jeweils Kühler 12 und 13 in den Druckleitungen 14 und 15 für das bedruckte Brenngas und die bedruckte Ladeluft vorgesehen. Diese können gegebenenfalls auch eine Baueinheit bilden. Des Weiteren ist eine Anordnung des Kühlers als Gemischkühler in der Ansaugstrecke nach der Zumischung des Brenngases möglich.
Im Ergebnis wird erfindungsgemäß bei getrennter Verdichtung von Ansaugluft und Brenngas in Summe dieselbe Gasmenge mit einem ähnlichen Druckverhältnis verdichtet, wie bei einer gemeinsamen Verdichtung eines Gas-Luftgemisches. Es ergibt sich damit ein vergleichbarer Gesamtwirkungsgrad des Turboaufladers wie bei einem System mit Vermischung im drucklosen Bereich, wobei dennoch die Gemischbildung dicht vor den Brennräumen erfolgt und damit eine präzise und dynamische Lambda-Regelung ermöglicht. Der Verdichtungsdruck des Brenngases kann dabei höher sein als der Verdichtungsdruck der Luft. Ebenso sind Ausführungen möglich, bei denen der Verdichtungsdruck der Luft im Verhältnis höher ist als der Verdichtungsdruck des Brenngases.

Somit resultiert die vorliegende Erfindung in einem verbesserten Motorwirkungsgrad bei hoher Präzision der Gemischregelung. Dies hat insbesondere bei einem dynamischen Betrieb und / oder bei der Verwendung von Flüssiggas erhebliche Vorteile.

Bevorzugt weist die Mischeinheit 7 dabei eine Steuerung auf, über welche das Luft-Kraftstoff-Verhältnis gesteuert und / oder geregelt wird, insbesondere durch Steuerung der Menge an bedrucktem Brenngas, welches der Ladeluft zugefügt wird, und/oder durch Steuerung der Luftmenge. Die Regelung und / oder Steuerung der Luftmenge bzw. Brenngasmenge geht einher mit der Anpassung der einzelnen Verdichtungsdrücke der verschiedenen Gase, d.h. der Luft und eines oder mehrere Brenngase.

Bevorzugt ist die Mischeinheit dabei so aufgebaut, dass die Menge einer Gaskomponente, insbesondere des Brenngases, welche in die andere Gaskomponente, insbesondere die Ladeluft, eingeblasen wird, angesteuert werden kann. Bevorzugt weist der Gasmotor dabei eine Steuerung auf, welche die Mischeinheit so ansteuert, dass das Gemisch aus Brenngas und Ladeluft, welches den Brennräumen des Gasmotors zugeführt wird, ein vorgegebenes Luft-Kraftstoff-Verhältnis aufweist. Besonders bevorzugt ist die Steuerung dabei so ausgeführt, dass das Luft-Kraftstoff-Verhältnis im stationären oder besonders auch im dynamischen Betrieb stabil und genau auf einen stöchiometrischen oder einen beliebigen anderen (überoder unterstöchiometrischen) Wert eingestellt wird.

Werden zwei separate Abgasturbolader zum Bedrucken der Ladeluft und des Brenngases eingesetzt, kann eine Steuerung bzw. eine Regelung des Luft-Kraftstoff-Verhältnisses durch die Ansteuerung der jeweiligen Abgasturbolader erfolgen. Insbesondere kann diese Ansteuerung der Abgasturbolader durch eine Ansteuerung des Abgasstroms durch die beiden Turbinen der Abgasturbolader erfolgen, insbesondere durch Ansteuerung von Steueranordnungen in den entsprechenden Bypässen. Gegebenenfalls kann die Ansteuerung der Abgasturbolader mit einer Ansteuerung der Mischeinheit verbunden werden. Sowohl bei Ausführung mit einer Turbine als auch mit zwei oder mehr Turbinen ist auch eine Steuerung und / oder Regelung der einzelnen Gasströme bzw. -Drücke mittels eines und mehrerer Verdichterbypässe möglich.

Bevorzugt kommt die vorliegende Erfindung dabei bei stöchiometrisch oder überstöchiometrisch betriebenen Motoren zum Einsatz, aber auch die Verwendung an unterstöchiometrisch betriebenen Motoren ist möglich. Insbesondere werden die Mischeinheit und die einzelnen Komponenten der Turboaufladung dabei so angesteuert, dass sich ein stabiles, genau auf einen angestrebten Wert gesteuertes und / oder geregeltes Gemisch aus einem oder mehreren Brenngasen und der Ladeluft ergibt.

Die Gasmotoren können dabei zum einen für den Stationärbetrieb eingesetzt werden, beispielsweise als Antrieb für einen Generator oder eine Pumpe. Weiterhin ergibt sich die Möglichkeit einer mobilen Anwendung, beispielsweise als Antrieb einer Bau- oder Umschlagmaschine oder im Bereich von Marineapplikationen, insbesondere zum Antrieb von Schiffen.

## Patentansprüche

1. Gasmotor (1) mit einer Mischeinheit (7) zum Mischen von mindestens zwei Gaskomponenten, welche einem oder mehreren Brennräumen des Gasmotors (1) zugeführt werden, insbesondere zum Mischen von Brenngas (9) und Ladeluft (8), und mit mindestens zwei Verdichtern (4, 4'), über welche die beiden Gaskomponenten vor der Zuführung zur Mischeinheit (7) separat verdichtet werden,
**dadurch gekennzeichnet,**
**dass** beide Verdichter (4, 4') von einer im Abgasstrang des Gasmotors angeordneten Turbine (3, 3') angetriebenen werden.

2. Gasmotor nach Anspruch 1, wobei die beiden Verdichter (4, 4') gemeinsam von einer Turbine (3) angetrieben werden, wobei bevorzugt die beiden Verdichter und die Turbine auf einer gemeinsamen Welle (14) angeordnet sind.

3. Gasmotor nach Anspruch 1, wobei die beiden Verdichter (4, 4') getrennt voneinander durch zwei im Abgasstrom angeordnete Turbinen (3, 3') angetrieben werden.

4. Gasmotor nach Anspruch 3, wobei die beiden Turbinen (3, 3') seriell im Abgasstrom angeordnet sind oder wobei die beiden Turbinen parallel im Abgasstrom angeordnet sind.

5. Gasmotor nach einem der vorangegangenen Ansprüche, wobei die beiden Verdichter (4, 4') so ausgelegt sind, dass die Ladeluft auf 1,5 bis 6 bar Überdruck verdichtet wird während das Brenngas auf einen um den Faktor 2 bis 4 höheren Druck verdichtet wird..

6. Gasmotor nach einem der vorangegangenen Ansprüche, mit mindestens einem zwischen einem der Verdichter (4, 4') und der Mischeinheit (7) oder nach der Mischeinheit (7) angeordneten Kühler (12, 13), insbesondere mit einem zwischen Verdichter (4) und Mischeinheit im Ladeluftstrang angeordneten Ladeluftkühler (12) und/oder mit einem zwischen Verdichter (4') und Mischeinheit im Brenngasstrang angeordneten Brenngaskühler (13) oder einem Gemischkühler zwischen Mischeinheit (7) und Brennraum.

7. Gasmotor nach einem der vorangegangenen Ansprüche, wobei die Mischeinheit (7) vor einer Verzweigung (10) der Ansaugstrecke für die einzelnen Brennräume angeordnet ist.

8. Gasmotor nach einem der Ansprüche 1 bis 6, wobei die Mischeinheit mindestens zwei Mischbereiche aufweist, welche jeweils nach einer Verzweigung der Ansaugstrecken für die einzelnen Brennräume angeordnet sind.

9. Gasmotor nach einem der vorangegangenen Ansprüche, welcher so ausgeführt ist, dass er mit einem stöchiometrischen oder über- oder unterstöchiometrischen Gemisch arbeitet, wobei vorteilhafterweise eine Steuerung vorgesehen ist, welche die Mischeinheit und/oder die einzelnen Komponenten der Turboaufladung so ansteuert, dass sich ein gewünschtes Luft/Kraftstoffgemisch ergibt.

10. Gasmotor nach einem der vorangegangenen Ansprüche, mit mindestens einer Zündkerze zum Zünden des Gemisches im Brennraum oder mindestens einer Zündöleinspritzung zum Zünden des Gemisches im Brennraum und/oder mit mindestens einer Glühkerze im Brennraum.

11. Verfahren zum Betrieb eines Gasmotors, insbesondere eines Gasmotors nach einem der vorangegangenen Ansprüche, wobei die Energie des Abgasstrom (5) dazu genutzt wird, um zwei Gaskomponenten, insbesondere die Ladeluft (8) und das Brenngas (9), separat zu verdichten, bevor diese miteinander gemischt werden.

12. Stationäre Vorrichtung mit einem Gasmotor nach einem der vorangegangenen Ansprüche, wobei der Gasmotor bevorzugt einen Elektro-Generator und/oder eine Hydraulikpumpe antreibt.

13. Schiff mit einem Gasmotor nach einem der vorangegangenen Ansprüche, wobei der Gasmotor bevorzugt eine Schiffsschraube antreibt.

14. Transportfahrzeug mit einem Gasmotor nach einem der vorangegangenen Ansprüche, insbesondere zum Transport von Personen und/oder von Güter, insbesondere Bus oder Lastwagen, wobei der Gasmotor bevorzugt ein Fahrwerk des Transportfahrzeuges antreibt.

15. Verfahrbares Arbeitsgerät mit einem Gasmotor nach einem der vorangegangenen Ansprüche, wobei der Gasmotor bevorzugt zum Antrieb eines Fahrwerks und/oder einer Arbeitsausrüstung dient, und/oder wobei der Gasmotor eine Hydraulikpumpe eines Hydrauliksystems antreibt.

## Claims

1. A gas engine (1) with a mixing unit (7) for mixing at least two gas components, which are supplied to one or more combustion chambers of the gas engine (1), in particular for mixing fuel gas (9) and charge air (8), and with at least two compressors (4, 4'), via which the two gas components are separately compressed before being supplied to the mixing unit (7),
**characterized in that**
both compressors (4, 4') are driven by a turbine (3, 3') arranged in the exhaust gas line of the gas engine.

2. The gas engine according to claim 1, wherein the two compressors (4, 4') are driven by one common turbine (3), wherein preferably the two compressors and the turbines are arranged on the same shaft (14).

3. The gas engine according to claim 1, wherein the two compressors (4, 4') are driven separately from one another by two turbines (3, 3') arranged in the exhaust gas flow.

4. The gas engine according to claim 3, wherein the two turbines (3, 3') are arranged in series in the exhaust gas stream or wherein the two turbines are arranged in parallel in the exhaust gas stream.

5. The gas engine according to any one of the preceding claims, wherein the two compressors (4, 4') are designed such that the charge air is compressed to 1.5 to 6 bar overpressure, while the fuel gas is compressed to a pressure which is higher by a factor of 2 to 4.

6. The gas engine according to any one of the preceding claims, with at least one cooler (12, 13) arranged between one of the compressors (4, 4') and the mixing unit (7) or after the mixing unit (7), in particular with a charge air cooler (12) arranged between the compressor (4) and mixing unit in the charge air line and/or with a fuel gas cooler (13) arranged between the compressor (4') and mixing unit in the fuel gas line or a mixture cooler between the mixing unit (7) and combustion chamber.

7. The gas engine according to any one of the preceding claims, wherein the mixing unit (7) is arranged in front of a junction (10) of the intake path for the individual combustion chambers.

8. The gas engine according to any one of claims 1 to 6, wherein the mixing unit has at least two mixing regions, which are respectively arranged after a junction of the intake paths for the individual combustion chambers.

9. The gas engine according to any one of the preceding claims, which is designed such that it operates with a stoichiometric or over- or under-stoichiometric mixture, wherein advantageously a controller is provided, which controls the mixing unit and/or the individual components of the turbocharger such that a desired air/fuel mixture results.

10. The gas engine according to any one of the preceding claims, with at least one spark plug for igniting the mixture in the combustion chamber or at least one ignition oil injection for igniting the mixture in the combustion chamber and/or at least one glow plug in the combustion chamber.

11. A method for operating a gas engine, in particular a gas engine according to any one of the preceding claims, wherein the energy from the exhaust gas stream (5) is used to separately compress two gas components, in particular charge air (8) and fuel gas (9), before these are mixed with one another.

12. A stationary device with a gas engine according to any one of the preceding claims, wherein the gas engine preferably drives an electric generator and/or a hydraulic pump.

13. A ship with a gas engine according to any one of the preceding claims, wherein the gas engine preferably drives a propeller.

14. A transport vehicle with a gas engine according to any one of the preceding claims, in particular for the transport of people and/or goods, in particular a bus or truck, wherein the gas engine preferably drives a chassis of the transport vehicle.

15. A drivable work tool with a gas engine according to any one of the preceding claims, wherein the gas engine is preferably used to drive a chassis and/or work equipment, and/or wherein the gas engine drives a hydraulic pump of a hydraulic system.

## Revendications

1. Moteur à gaz (1) comprenant une unité de mélange (7) pour le mélange d'au moins deux composants gazeux, qui sont alimentés dans une ou plusieurs chambres de combustion du moteur à gaz (1), en particulier pour le mélange de gaz combustible (9) et d'air de suralimentation (8), et comprenant au moins deux compresseurs (4, 4'), par le biais desquels les deux composants gazeux sont comprimés séparément avant l'alimentation dans l'unité de mélange (7),
**caractérisé en ce que**
les deux compresseurs (4, 4') sont entraînés par une turbine (3, 3') disposée dans la conduite de gaz d'échappement du moteur à gaz.

2. Moteur à gaz selon la revendication 1, dans lequel les deux compresseurs (4, 4') sont entraînés ensemble par une turbine (3), les deux compresseurs et la turbine étant de préférence disposés sur un arbre (14) commun.

3. Moteur à gaz selon la revendication 1, dans lequel les deux compresseurs (4, 4') sont entraînés séparément l'un de l'autre par deux turbines (3, 3') disposées dans le flux de gaz d'échappement.

4. Moteur à gaz selon la revendication 3, dans lequel les deux turbines (3, 3') sont disposées en série dans le flux de gaz d'échappement ou dans lequel les deux turbines sont disposées en parallèle dans le flux de gaz d'échappement.

5. Moteur à gaz selon l'une des revendications précédentes, dans lequel les deux compresseurs (4, 4') sont conçus de telle manière que l'air de suralimentation est comprimé à une surcompression de 1,5 à 6 bar, tandis que le gaz combustible est comprimé à une pression de 2 à 4 fois supérieure.

6. Moteur à gaz selon l'une des revendications précédentes, comprenant au moins un refroidisseur (12, 13) disposé entre un des compresseurs (4, 4') et l'unité de mélange (7) ou après l'unité de mélange (7), en particulier un refroidisseur d'air de suralimentation (12) disposé dans la conduite d'air de suralimentation entre le compresseur (4) et l'unité de mélange et/ou un refroidisseur de gaz combustible (13) disposé dans la conduite de gaz combustible entre le compresseur (4') et l'unité de mélange ou un refroidisseur de mélange entre l'unité de mélange (7) et la chambre de combustion.

7. Moteur à gaz selon l'une des revendications précédentes, dans lequel l'unité de mélange (7) est disposée avant une ramification (10) du chemin d'aspiration pour les différentes chambres de combustion.

8. Moteur à gaz selon l'une des revendications 1 à 6, dans lequel l'unité de mélange comporte au moins deux zones de mélange, qui sont disposées respectivement après une ramification des chemins d'aspiration pour les différentes chambres de combustion.

9. Moteur à gaz selon l'une des revendications précédentes, qui est réalisé de telle manière qu'il fonctionne avec un mélange stoechiométrique ou sur-stoechiométrique ou sous-stoechiométrique, dans lequel un dispositif de commande est de préférence prévu, qui commande l'unité de mélange et/ou les différents composants du turbocompresseur de telle manière qu'un mélange air/carburant souhaité est obtenu.

10. Moteur à gaz selon l'une des revendications précédentes, comprenant au moins une bougie d'allumage pour l'allumage du mélange dans la chambre de combustion ou au moins une injection de carburant inflammable pour l'allumage du mélange dans la chambre de combustion et/ou comprenant au moins une bougie de réchauffage dans la chambre de combustion.

11. Procédé de fonctionnement d'un moteur à gaz, en particulier d'un moteur à gaz selon l'une des revendications précédentes, dans lequel l'énergie du flux de gaz d'échappement (5) est utilisée pour comprimer séparément deux composants gazeux, en particulier l'air de suralimentation (8) et le gaz combustible (9), avant que ceux-ci ne soient mélangés l'un avec l'autre.

12. Dispositif stationnaire comprenant un moteur à gaz selon l'une des revendications précédentes, dans lequel le moteur à gaz entraîne de préférence un générateur électrique et/ou une pompe hydraulique.

13. Navire comprenant un moteur à gaz selon l'une des revendications précédentes, dans lequel le moteur à gaz entraîne de préférence une hélice de navire.

14. Véhicule de transport comprenant un moteur à gaz selon l'une des revendications précédentes, en particulier pour le transport de personnes et/ou de marchandises, en particulier car ou camion, dans lequel le moteur à gaz entraîne de préférence un mécanisme de déplacement du véhicule de transport.

15. Outil de travail mobile comprenant un moteur à gaz selon l'une des revendications précédentes, dans lequel le moteur à gaz sert de préférence à entraîner un mécanisme de déplacement et/ou un équipement de travail, et/ou dans lequel le moteur à gaz entraîne une pompe hydraulique d'un système hydraulique.
